# EUROPEAN PATENT SPECIFICATION

(11) **EP 0 559 131 B1**
(45) Date of publication and mention of the grant of the patent: **10.01.1996**
(21) Application number: 93103281.7
(22) Date of filing: 02.03.1993
(51) Int. Cl.: F16K 15/02

(54) **Multifunction check valve**
Mehrzweck-Rückschlagventil
Soupape de retenue à plusieurs fonctions

(30) Priority: 06.03.1992 IT GE920022
(43) Date of publication of application: 08.09.1993
(73) Proprietor: TECNO PLASTIC S.r.l., I-16012 Sarissola Busalla (IT)
(72) Inventor: Tubaro, Bruno, I-16030 Sori (IT)
(74) Representative: Porsia, Bruno

(56) References cited:
- DE-U- 1 697 174
- GB-A- 2 159 248
- US-A- 2 959 188
- US-A- 3 356 103
- US-A- 4 362 184

## Description

The invention relates to a multifunctional non-return valve according to the pre-characterising part of claim 1.

A non-return valve of this kind is known from the document GB-A-2 159 248. In this known construction, the shut-off member is guided coaxially by its cylindrical part sliding in a cylindrical cavity of the baffle fixed to the valve housing. To allow an easy axially sliding of the shut-off member in the cavity of the baffle, a compensation hole must be provided in the conical cap of the baffle on the opposite side of the shut-off member.

The object of the invention is to construct a valve according to the pre-characterising part of claim 1, in such a way that it is useable in any of the alternative ways without requiring any substantial modification and that it is of simple and inexpensive construction, as well as being easy and quick to assemble and disassemble to adapt it to the various types of use.

The invention achieves these objects with a multifunctional valve of the type described in the pre-characterising part of claim 1 and characterised in that the shut-off member is guided coaxially in the valve housing by its cylindrical part sliding along the radial fins of an internal circular array of radial fins connected to the valve housing.

In a preferred embodiment of the invention, the internal radial fins are formed by axial extensions towards the annular sealing seat of the radial fins to which the baffle is fixed.

In another improvement, the baffle is positioned at a head end of the tubular valve housing, while the annular valve seat is formed by a sealing ring which is sealable against and removable from the opposite head end of the valve housing and which is provided with a conical or ogival sealing surface corresponding to the mating part of the cup-type shut-off member.

When used as a foot valve, for example at the bottom of pipes drawing liquids from wells or the like, in order to close the valve under the weight of a fluid, the valve of the invention is so oriented that the closing movement of the cup-type shut-off member corresponds to the direction of the gravitational pressure of the fluid on this member, that is generally vertically and with the open head end of the cup-type shut-off member facing upwards.

When used as an air relief valve, the valve of the invention is again arranged generally vertically, with the open end of the cup-type shut-off member facing generally downwards.

In another variant of the invention, there can be placed between tha baffle and the cup-type shut-off member, elastic means acting in the opposite direction to the opening movement of the shut-off member.

When used as a safety valve or pressure regulating valve, these elastic means may be a calibrated spring which is loaded in the direction of compression of the shut-off member against the annular valve seat and is fixed between the mutually confronting internal sides of the conical cap and the cup-type shut-off member, while the valve is positioned so that the conical or ogival head end of the cup-type shut-off member acting on the valve seat faces the fluid at pressure and so that its open end is facing outwards.

When used as a horizontal non-return valve, the elastic means between the conical cap and the cup-type shut-off member may be of any kind, for example an elastically compressible blister which is placed between the mutually confronting head ends of these and which, when the shut-off member is in the closed position, is essentially in its expanded rest condition or in slight compression.

When used as an impurities collector, a filter element is placed between the annular sealing seat and the baffle, in place of the cup-type shut-off member. This element may be a cylindrical tubular sleeve with an internal and external diameter approximately the same as the shut-off member and with a permeable peripheral wall and whose open head ends are joined in a leaktight manner to the peripheral edge of the conical cap and to the sealing surface of the sealing ring.

The structural simplicity and the multifunctionality of the valve of the invention are both clear from the foregoing. The various functions are obtained by simply varying the arrangement and orientation of the valve with respect to the fluid flow and by inserting or omitting the elastic component in its desired form or by replacing the shut-off member with the cylindrical filter element. Constructing the annular valve seat as a sealing ring that can be removably fixed to the valve housing enables the abovementioned modifications to be made very quickly and without special tools.

The invention also encompasses other features which further improve the valve described above and these are the subjects of the subclaims.

The special features of the invention and the advantages which it procures will be described in greater detail in the description of a number of preferred embodiments. These are illustrated by way of non-restricting examples in the accompanying drawings, in which:

Fig. 1 shows an axial section of the valve according to the invention in the form that can be used either as a foot valve or as an air relief valve.

Fig. 2 shows two half axial sections relating to the variant of the valve shown in Fig. 1 in the form usable as a horizontal non-return valve and as a safety valve, respectively.

Fig. 3 shows an axial half section of the variant of the valve shown in Fig. 1 in the form that can be used as an impurities collector.

Figs 4 and 5 show an enlarged cross section of two embodiments of the sealing ring acted on by the shut-off member.

Fig. 6 is a view similar to the view shown in Fig. 4 and shows an alternative embodiment of the conical or ogival cap of the shut-off member.

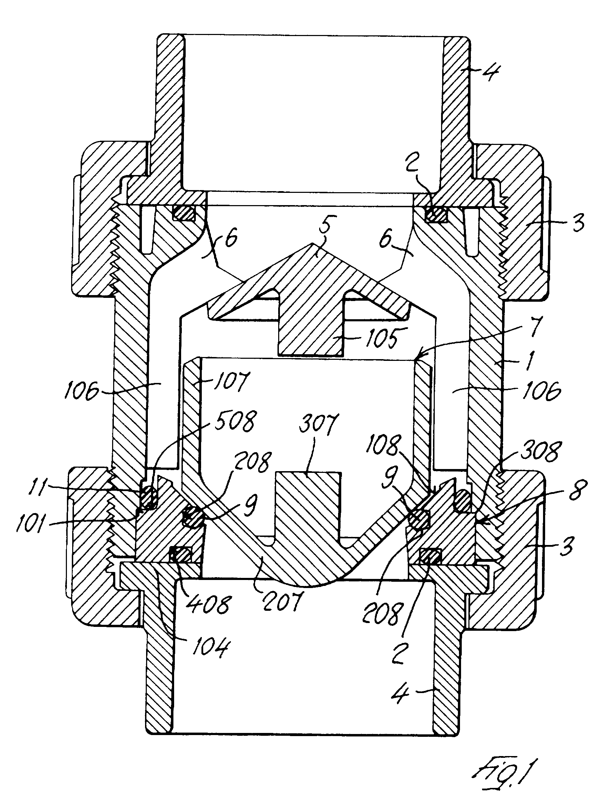

Referring to Fig. 1, the valve of the invention comprises a cylindrical tubular valve housing 1 that is open at its head ends to which pipe couplings 4 can be sealingly fixed by means of seals 2 and round nuts 3. Positioned inside the tubular valve housing 1, at one of its head ends, is a baffle 5 in the form of a coaxial conical cap. The baffle 5 is stationary and points out of the valve housing 1. The external diameter of said baffle 5 is less than the internal diameter of the valve housing 1 and this baffle 5 is preferably fixed integrally inside the valve housing 1 by means of a series of (in this example three) radial fins 6. The radial fixing fins 6 are positioned at equal angular distances from each other and connect a peripheral portion of the external surface of the conical cap 5 to the confronting portion of the internal surface of the valve housing 1. In particular, level with this conical cap 5, the internal surface of the valve housing 1 tapers conically so as generally to match the taper of this conical cap 5, with the result that between the conical cap 5 and the valve housing 1 an annular conical passage is formed which is divided into a series of adjacent channels by the radial fixing fins 6. The radial fixing fins 6 possess an axial extension 106 beyond the conical cap 5 towards the opposite head end of the valve housing 1. The extensions 106 thus form an internal circular array of radial fins to guide a cup-type shut-off member 7. The cup-type shut-off member 7 is open on the side that faces the conical cap 5 and possesses a cylindrical portion 107 within the valve housing 1. The cylindrical portion 107 is of slightly smaller external diameter than the internal diameter of the circular array of extensions 106 and is guided as it slides axially along said extensions 106, so that it is not shifted out of the axis of the valve housing 1 or of the cooperating valve seat 108. The head end of the shut-off member 7 furthest from the conical cap 5 is closed and is formed by a portion 207 of conical or ogival shape pointing out of the valve housing 1. The conical portion 207 of the shut-off member 7 is intended to act by means of its external surface on the confronting annular valve seat 108 which is given a corresponding conical or ogival shape and is provided with a housing groove 208 for an annular seal 9.

The annular valve seat 108 is positioned at the associated head end of the valve housing 1. An advantageous feature is that it consists of the internal lateral surface or of a portion of said internal surface of a sealing ring 8 which fits leaktightly and removably within the valve housing 1.

The sealing ring 8 is advantageously secured by using the pipe coupling 4 and the associated round nut 3 which clamps the latter against the corresponding head end of the valve housing 1. The sealing ring 8 is clamped between an internal annular shoulder 101 on the valve housing 1 and the flange 104 of the pipe coupling 4.

In particular, the sealing ring 8 comprises, on its side facing towards the interior of the valve housing 1, a stepped cylindrical widening 308 which interacts with the internal annular shoulder 101 on the valve housing 1, while the remote head end is parallel with the confronting end surface of the flange 104 and preferably carries an annular seal 2, for example an O ring, which is housed in an annular groove 408. To enable the O ring 2 to be compressed, the groove 408 is shallower in depth and greater in width than the diameter of this O ring 2. A peripheral seal 11 can be provided also between the internal surface of the valve housing 1 and the external surface of the sealing ring 8. The housing of the peripheral seal 11 is a stepped annular recess 508 with a smaller diameter than the internal diameter of the valve housing 1, which recess is provided on the innermost side of the sealing ring 8 and is open towards said side. Advantageously the stepped recess 508 joins smoothly with the stepped widening 308.

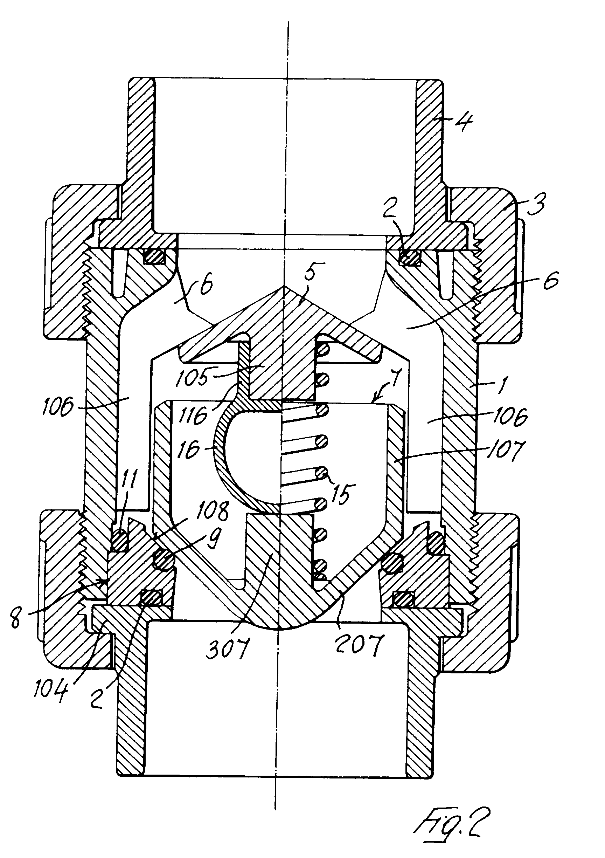

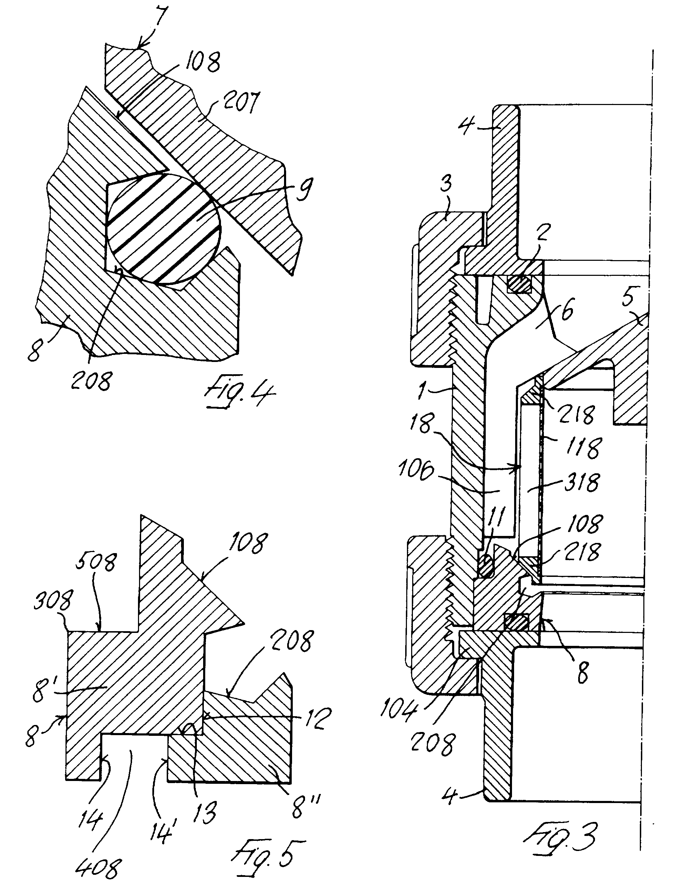

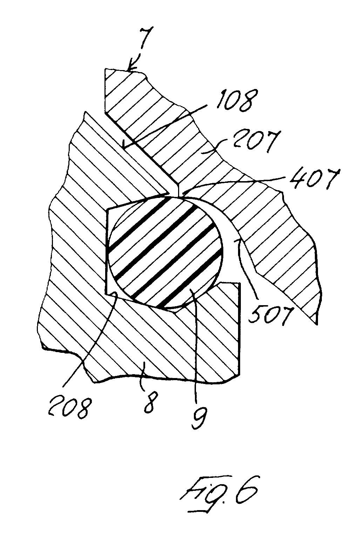

According to a further feature which is shown more clearly in Figs 4 and 5, the seal 9 of the valve seat 108 is an O ring and fits securely into the housing groove 208 which covers more than 180°. Advantageously the cross section of the housing groove 208 is a polygon circumscribing the circular section of the O ring, for example a pentagon arranged so that one of its diagonals is perpendicular to the valve seat 108 and the distance between its centre and the valve seat 108 is less than the radius of the circular cross section of the O ring. The pentagonal shape illustrated in Figures 4 and 5 is particularly simple and is oriented with one side parallel to the valve seat 108, the distance of which from the centre of the polygon is greater than the distance of the valve seat 108 from said centre. As a result the seal 9 is housed securely, free spaces are obtained in the corners sufficient to permit the seal 9 to deform elastically when compressed, the seal is provided with stable and continuous support, and a secure axial and radial protection is provided against forces acting on the seal and tending to expel it from the housing groove 208.

With particular reference to Fig. 5, to enable easy fabrication, for example injection moulding of the sealing ring 8, eliminating the problems caused by the undercuts of the housing groove 208, it is advantageous make the sealing ring in two parts that can be fixed together integrally, for example by welding, bonding or other similar processes, or detachably by virtue of the pipe coupling 4 and of the associated round nut 3, and each of which two annular portions 8', 8'' forms half of the cross section of the annular housing groove 208 for the seal 9 fitted to the valve seat 108 and part of the outermost side of the sealing ring 8. Preferably the two portions 8' and 8'' are so made that they possess a cylindrical contact surface 12 which terminates at the vertex of the housing groove 208 diametrically opposite the valve seat 108 and a mutual abutting surface perpendicular to the axis of the sealing ring 8 which is met in the direction of the outermost side of the sealing ring 8 by another cylindrical surface 14, 14'. The contact surface 13 perpendicular to the axis of the sealing ring 8 extends advantageously level with the base of the housing groove 408 of the seal 2 on that side of the sealing ring 8 that acts on the flange 104 of the pipe coupling 4 and the cylindrical surfaces 14, 14' are radially separated from each other and form the opposing lateral walls of said housing groove 408.

Referring to the variant shown in Fig. 6, the shut-off member 7 acts on the valve seat 108, that is on the annular seal 9 of the ring 8, via a coaxial external annular spur 407 on the conical portion 207 of this 7. The function of the annular spur 407 is to prevent leaks, especially during the initial moments of valve closure: such leaks would be due to a slight misalignment or to an inclination of the shut-off member 7 within the intended play. The annular spur therefore projects beyond the outer surface of the portion 207 of the shut-off member sufficiently to compensate in great measure for the intended play, and consequently acts on the conical surface of the valve seat (108) during the approach of the shut-off member towards it, easily preventing the shut-off member 7 from tilting in the last moments of valve closure.

The annular spur advantageously tapers towards its free end to a point, by which it acts on the annular seal 9. Leaktightness between the shut-off member 7 and the seal 9 is thus provided by a single annular sealing line or in an annular plane perpendicular to the axis of the valve seat 108.

To prevent the seal 9 from also touching the conical surface 207 of the shut-off member 7, which would compromise the leaktightness between the spur 407 and the seal 9, that side of the annular spur 407 nearest the free extremity of the shut-off member 7 is given an annular groove or hollow 507.

In the embodiment shown in Fig. 1, the valve of the invention can be used as a foot valve, for example at the bottom inlets of suction pipes through which liquids are drawn from wells or the like, closure of which is brought about by the pressure produced by the weight of a column of water above the valve. For this purpose the valve is connected to the unit in a vertical position with the open rim of the cup-type shut-off member uppermost.

If the same valve is mounted upside down as compared with the above, for example at the top outlets of accumulator units or containers or the like, it can be used as an air relief valve. The cup-type shut-off member is moved into the closed position by the rising level of liquid in the valve, acting as a float because of the air trapped inside it, whereas when only air gathers in the valve, this air does not have sufficient force to resist the downward action of gravity on the cup-type shut-off member into the open position: the valve thus automatically acts as an air relief (siphon action).

Referring to Fig. 2, it is possible to provide elastic components between the baffle 5 and the cup-type shut-off member 7. Depending on the type of function desired, that is whether as a horizontal non-return valve or as a safety valve, the elastic component may be a blister 16: this compresses elastically as the valve opens, offering a slight resistance to compression, whereas as the shut-off member 7 closes, the blister becomes more or less expanded, although it may still be under a slight compressive load; or it may be a calibrated spring 15 which is stressed to compress the shut-off member 7 against the valve seat 108 with a predetermined force. The assembling of the elastic components is facilitated by the previously described structure and further facilitated by the fact that two central axial hubs 105 and 307 extend towards each other from the internal surfaces of the mutually confronting head ends of the baffle 5 and of the cup-type shut-off member 7. If a calibrated spring 15 is used, it may usefully be a helical spring and its ends may be engaged over said hubs 105, 307, whereas if an elastically compressible blister 16 is used, it may be fixed by means of a suitable socket 116 to one of the hubs 105, while the other hub 307 is the compressing member acting on this blister 16.

Referring to Fig. 3, the valve of the invention may easily be modified to allow it to be used as an impurities collector. This is achieved by simply replacing the cup-type shut-off member with a cylindrical tubular filter 18 consisting of a permeable peripheral wall 118 placed between head rings 218 which can usefully form a rigid cylindrical supporting cage, these rings being connected to each other by equidistant axial ribs 318. The filter 18 has an external diameter corresponding approximately to that of the cup-type shut-off member 7 and is held tightly between the sealing ring 8 and the baffle 5 which seals off the corresponding head end to allow the fluid to pass only through the permeable wall 118. In particular, the head rings are of an elastic material which will ensure a sufficient seal, such as for example hard rubber, or a plastic that is softer than the valve housing and valve seat, or similar materials. The external diameter of the peripheral edge of the baffle 5 corresponds to the internal diameter of the associated head ring 218 of the filter 18 and fits sealingly against said peripheral edge. A certain radial compressive action of the head ring 218 against the baffle 5 can be encouraged by the radial fixing fins 6 which project beyond the peripheral edge of the baffle with a free section extending flush with the external conical surface of the baffle and which have the same inclination, which section joins up with the axial extensions 106, forming an inclined surface which axially abuts and wedges the terminal end of the head ring 218 - this terminal end being advantageously cylindrical. The head ring 218 that acts on the valve seat 108 is correspondingly conical. Advantageously, to save making two different head rings 218, and to further facilitate the fitting of the filter 18, the rings are identical in shape. The external side of each ring tapers conically so as to correspond to the taper of the valve seat 108 and terminates in a cylindrical extension. As can be seen in Figure 3, the dimensions of the whole are such that at the baffle 5 end the cylindrical portion acts on the abovementioned free sections of the radial fins 6, while at the valve seat 108 end the cylindrical portion can pass freely into the housing groove 208 of the seal 9, advantageously not present, without thus impeding the seal against said seat 108. Alternatively, if a suitable seal 9 is used, it can be left in the housing groove 108 and will provide additional leaktightness against the cylindrical extremity of the head ring 218.

The structural simplicity of the valve of the invention means that it can be fabricated, for example from plastic, by the injection moulding of a small number of separate structural parts, basically the pipe couplings 4, the round nuts 3, the sealing rings 8', 8'', the shut-off member 7 and the valve housing 1 together with the baffle 5.

## Claims

1. Multifunctional non-return valve that can be used, in particular, either as a gravity-closed non-return valve, air relief valve, horizontal non-return valve or spring-loaded safety valve, or as an impurities collector; and that comprises a basically cylindrical tubular valve housing (1) which is open at its head ends, with which leaktight connections with pipe couplings (4) can be made and inside which housing an annular valve seat (108) is provided which acts on a shut-off member (7) moving axially inside said valve housing (1) between a closed position, leaktightly against the valve seat (108), and an open position away from said seat (108), where inside the valve housing (1), at the opposite end from the annular valve seat (108), is a baffle (5) in the shape of a conical cap of much smaller diameter than the valve housing (1), pointing towards the exterior of the valve housing (1) and fixed coaxially to said valve housing (1) by means of radial fins (6), so forming a series of channels distributed peripherally about the baffle (5), while the shut-off member (7) is positioned between the baffle (5) and the annular valve seat (108) and is of the cup type, having a generally cylindrical portion (107) inside the valve housing (1) and a conical or ogival end portion (207) at the end that acts on the annular valve seat (108), the shut-off member (7) being guided coaxially in the valve housing (1) by its cylindrical part (7) sliding along the cylindrical part of the baffle, characterised in that the shut-off member (7) is guided coaxially in the valve housing (1) by its cylindrical part (7) sliding along the radial fins (106) of an internal circular array of radial fins connected to the valve housing (1).

2. Valve according to Claim 1, characterised in that the internal radial fins by which the shut-off member (7) is guided are formed by axial extensions (106) towards the annular valve seat (108) of the radial fins (6) to which the baffle (5) is fixed.

3. Valve according to Claim 1 or 2, characterised in that the baffle (5) is positioned at a head end of the tubular valve housing (1), while the annular valve seat (108) is formed by the internal radial surface of a sealing ring (8) which is sealable against and removable from the opposite head end of the valve housing (1) and is conical or ogival corresponding to the mating conical or ogival portion (207) of the cup-type shut-off member (7).

4. Valve according to one or more of the preceding claims, characterised in that it is used as a foot valve and is so oriented that the closing movement of the cup-type shut-off member (7) corresponds to the direction of the gravitational pressure of a fluid on this member, that is generally vertically and with the open head end of the cup-type shut-off member (7) facing upwards.

5. Valve according to one or more of the preceding claims, characterised in that it is used as an air relief valve, being again arranged generally vertically, with the open end of the cup-type shut-off member (7) facing generally downwards.

6. Valve according to one or more of the preceding claims, characterised in that it is used as a horizontal non-return valve, there being provided between the baffle (5) and the cup-type shut-off member (7) elastic means (15) that are compressible by a slight force in the direction of opening of the shut-off member (7) and that when the shut-off member (7) is in the closed position are essentially expanded in the rest position or in slight compression.

7. Valve according to Claim 6, characterised in that the elastically compressible component consists of a blister (16) and the baffle (5) and the shut-off member (7) are provided with coaxial hubs (105, 307) pointing towards each other which form either the fixing component of the blister (16) or the member that compresses the latter.

8. Valve according to one or more of the preceding claims, characterised in that it is used as a safety valve or pressure regulating valve, the elastic means placed between the baffle (5) and the shut-off member (7) being a calibrated spring (15) which is stressed under a predetermined load in the direction of compression of the shut-off member (7) against the annular valve seat (108).

9. Valve according to Claim 8, characterised in that the calibrated spring (15) is helical and is fixed by means of its ends on the hubs (105, 307) projecting internally to the valve housing (1) from the mutually confronting internal sides of the conical cap (5) and cup-type shut-off member (7), while the valve is positioned so that the conical or ogival head end (207) of the cup-type shut-off member (7) acting on the valve seat (108) faces the fluid at pressure and so that its open end is facing outwards.

10. Valve according to one or more of the preceding claims, characterised in that it is used as an impurities collector, the cup-type shut-off member (7) being replaceable by a tubular filter (18) having permeable peripheral cylindrical walls and an internal and external diameter approximately the same as the cylindrical portion (107) of the shut-off member (7) and which can be sealed tightly between the valve seat (108) and the baffle (5).

11. Valve according to Claim 10, characterised in that the external diameter of the peripheral edge of the conical cap baffle (5) corresponds approximately to the diameter of the cup-type shut-off member (7) and of the tubular filter (18), the filter (18) consisting of a cage providing cylindrical support (218, 318) for a permeable filtering wall (118), the head ends of which cage comprise head rings (218) that are sealingly compressible against the external peripheral edge of the conical cap baffle (5) and against the valve seat (108).

12. Valve according to Claim 11, characterised in that the radial fins (6) to which the baffle (5) is fixed comprise a radial section projecting beyond the peripheral edge of the baffle (5) which extends level with the external surface of the baffle (5) and is inclined so as to match the taper of this baffle (5), forming surfaces which axially abut the filter (18) and wedge the corresponding head ring (218) against the peripheral edge of the baffle (5), while the head ring (218) acting on the valve seat (108) is correspondingly conical on its external peripheral side.

13. Valve according to one or more of the preceding claims, characterised in that the valve seat (108) is a conical surface and has an annular groove (208) to house a seal (9) which covers more than 180° around the seal and the distance between whose centre and the valve seat (108) is less than the radius or than the thickness of said seal (9).

14. Valve according to Claim 13, characterised in that the seal (9) is an annular seal and is of circular cross section, while the associated housing groove (208) is a polygon circumscribing the cross section of the seal (9).

15. Valve according to one or more of the preceding claims, characterised in that the sealing ring (8) is made from two separate portions (8', 8'') fixed stably together or sealable together, the two said portions being so shaped that each has a portion or half of the cross section of the housing groove (208) for the seal (9) of the valve seat (108).

16. Valve according to Claim 15, characterised in that the two portions (8', 8'') of the sealing ring (8) are formed by two rings provided with a cylindrical surface (12) of mutual contact which on one side meets that vertex of the housing groove (208) in the valve seat (108) furthest from said valve seat (108) and on the other side meets an annular surface (13) of mutual contact in the axial direction which extends over an intermediate plane in the sealing ring (8) perpendicular to the axis of the sealing ring (8), while said annular surface (13) meets another cylindrical surface of mutual contact (14, 14') of greater diameter than the first cylindrical surface (12) of mutual contact.

17. Valve according to one or more of the preceding claims, characterised in that the sealing ring (8) can be clamped leaktightly between an annular shoulder of axial abutment (101) near the corresponding head end of the valve housing (1) and the flange (104) of a pipe coupling (4) compressible against the external head end of the sealing ring (8) by the use of clamping means (3).

18. Valve according to Claim 17, characterised in that between the flange (104) of the pipe coupling (4) and the external head surface of the sealing ring (8) is an annular seal (2) which is housed in an annular groove (408) in the sealing ring (8), the innermost wall of said groove being formed by part of the annular surface (13) of mutual contact between the annular portions (8', 8'') and the lateral walls of this groove (408) being formed by the cylindrical surfaces (14, 14') of mutual contact between said two ring portions (8', 8'') which have different radii from each other.

19. Valve according to one or more of the preceding claims, characterised in that the sealing ring (8) comprises an external stepped cylindrical widening (308) which abuts against the internal annular shoulder (101) of the valve housing (1), which step extends radially towards the interior of the sealing ring (8) and forms a housing groove (508) which is open at the head end of the sealing ring (8) facing into the interior of the valve housing (1), for an annular peripheral seal (11).

20. Valve according to one or more of the preceding claims, characterised in that the shut-off member (7, 207) acts on the valve seat (108, 9) by means of an external annular spur (407).

21. Valve according to Claim 20, characterised in that the external annular spur (407) is formed into a point at its free end by which it acts on the annular seal (9) provided in the valve seat (108).

22. Valve according to Claim 20 or 21, characterised in that the annular spur (407) is coaxial with the shut-off member (7).

23. Valve according to one or more of Claims 20 to 22, characterised in that the annular spur (407) projects beyond the external surface of the shut-off member (7, 207) sufficiently to compensate at least partly for the play between the shut-off member (7) and the valve seat (108).

24. Valve according to one or more of preceding Claims 20 to 23, characterised in that on that side of the annular spur (407) nearest the free extremity of the shut-off member (7) is an annular hollow or an annular groove (507).

25. Valve according to one or more of the preceding claims, characterised in that the head rings (218) of the cylindrical filter cage (18) are manufactured identical to each other and comprise a section which tapers conically towards the external head end that is formed by a cylindrical section, the dimensions of the whole being such that the cylindrical section of the head ring (218) acting on the valve seat (108) can project into the housing groove (208) of this seat, enabling the conical section to act on said valve seat (108), while the cylindrical section of the ring (218) at the baffle end acts on the free inclined sections of the radial fixing fins (6) in such a direction that the head ring (218) abuts axially and wedges against the external peripheral edge of the baffle (5).

26. Valve according to Claim 25, characterised in that the housing groove (208) of the valve seat (108) can house an annular seal (9) acting sealingly on the cylindrical head end of the corresponding head ring (218) of the filter (18).

27. Valve according to one or more of the preceding claims, characterised in that the valve housing (1) and the baffle (5) with the radial fixing fins (6) and the axial extensions (106) are made in one piece, preferably of plastic.

## Patentansprüche

1. Mehrzweck-Rückschlagventil, das als ein unter dem Einfluß der Schwerkraft schließendes Rückschlagventil verwendet werden kann oder als Entlüftungsventil, als horizontal angeordnetes Rückschlagventil, als federbelastetes Sicherheitsventil oder als Sammeleinrichtung für Verunreinigungen, mit einem im wesentlichen zylindrischen, rohrförmigen Ventilgehäuse (1), das an seinen Kopfenden offen ist, die leckdicht mit Anschluß-Rohrstücken (4) verbunden werden können, wobei im Gehäuse ein ringförmiger Ventilsitz (108) vorgesehen ist, der auf ein Schließglied (7) einwirkt, das sich in axialer Richtung im Ventilgehäuse (1) bewegt, und zwar zwischen einer geschlossenen Lage, in der es leckdicht am Ventilsitz (108) anliegt, und einer offenen Lage beabstandet vom Ventilsitz (108), wobei im Ventilgehäuse (1) an demjenigen Ende, das dem ringförmigen Ventilsitz (108) gegenüberliegt, ein Ablenkstück (5) in konischer Form mit einem viel kleineren Durchmesser als derjenige des Ventilgehäuses (1) vorgesehen ist, das in Bezug auf das Ventilgehäuse (1) nach außen weist und das mit Hilfe radialer Rippen (6) koaxial derart am Ventilgehäuse (1) befestigt ist, daß eine Reihe von Kanälen ausgebildet wird, die in Umfangsrichtung rings um das Ablenkstück verteilt angeordnet sind, während das Schließlied (7) sich zwischen dem Ablenkstück (5) und dem ringförmigen Sitz (108) befindet, napfförmig ausgebildet ist und einen im wesentlichen zylindrischen Teil (107) im Inneren des Ventilgehäuses (1) sowie ein konisches oder spitzbogenförmiges Endteil (207) hat, und zwar an demjenigen Ende, das mit dem ringförmigen Ventilsitz (108) zusammenarbeitet, wobei das Schließglied (7) durch sein Zylinderteil (7), das längs des zylindrischen Teils des Ablenkstücks gleitet, koaxial im Ventilgehäuse (1) geführt ist,
**dadurch gekennzeichnet**,
daß das Schließlied (7) durch sein Zylinderteil (7) koaxial im Ventilgehäuse (1) geführt ist, das längs der radialen Rippen (106) einer inneren, kreisförmigen Reihe von radialen Rippen gleitet, die mit dem Ventilgehäuse (1) verbunden sind.

2. Ventil nach Anspruch 1,
**dadurch gekennzeichnet**,
daß die inneren radialen Rippen, durch die das Schließglied geführt wird, von axialen Verlängerungen (106) in Richtung auf den ringförmigen Ventilsitz (108) der radialen Rippen (6) geführt ist, an denen das Ablenkstück (5) befestigt ist.

3. Ventil nach Anspruch 1 oder 2,
**dadurch gekennzeichnet**,
daß das Ablenkstück (5) am Kopfende des rohrförmigen Ventilgehäuses (1) befestigt ist, während der ringförmige Ventilsitz (108) durch die innere radiale Fläche eines Dichtrings (8) geformt ist, der am anderen Kopfende des Ventilgehäuses (1) dichtend anliegt und davon entfernt werden kann, und der konisch oder spitzbogenförmig ausgebildet ist, entsprechend dem entsprechenden konischen oder spitzbogenförmigen Teil (207) des napfförmigen Schließgliedes (7).

4. Ventil nach einem oder mehreren der vorhergehenden Patentansprüche,
**dadurch gekennzeichnet**,
daß es als Bodenventil verwendet wird, und daß es so ausgerichtet ist, daß die Schließewegung des napfförmigen Schließgliedes (7) der Richtung der auf ein Medium einwirkenden Schwerkraft in diesem Glied entspricht, die im wesentlichen vertikal ausgerichtet ist, wobei das offene Kopfende des napfförmigen Schließgliedes (7) nach oben weist.

5. Ventil nach einem oder mehreren der vorhergehenden Patentansprüche,
**dadurch gekennzeichnet**,
daß es als Entlüftungsventil verwendet wird, wobei es wiederum vertikal angeordnet ist, und wobei das offene Ende des napfförmigen Schließgliedes (7) im wesentlichen nach unten weist.

6. Ventil nach einem oder mehreren der vorhergehenden Patentansprüche,
**dadurch gekennzeichnet**,
daß es als horizontales Rückschlagventil verwendet wird, wobei zwischen dem Ablenkstück (5) und dem napfförmigen Schließglied (7) elastische Mittel (15) vorgesehen sind, die durch eine geringe Kraft in Richtung des Öffnens des Schließgliedes (7) komprimiert werden können, und daß, wenn sich das Schließlied (7) in der geschlossenen Position befindet, dann das elastische Mittel im wesentlichen in der Ruhelage oder unter geringer Kompression expandiert ist.

7. Ventil nach Anspruch 6,
**dadurch gekennzeichnet**,
daß das elastisch komprimierbare Mittel aus einer Blase (16) besteht, und daß das Ablenkstück (5) und das Schließglied (7) mit koaxialen Naben (105,307) versehen sind, die aufeinander zuweisen, und die entweder die Blase (16) befestigen oder dasjenige Teil, das die Blase komprimiert.

8. Ventil nach einem oder mehreren der vorhergehenden Patentansprüche,
**dadurch gekennzeichnet**,
daß es als Sicherheitsventil oder Druckregulierventil verwendet wird, wobei das elastische Mittel, das sich zwischen dem Ablenkstück (5) und dem Schließglied (7) befindet, eine geeichte Feder (15) ist, die unter einer vorbestimmten Belastung in Kompressionsrichtung des Schließgliedes (7) gegen den ringförmigen Ventilsitz (108) gespannt ist.

9. Ventil nach Anspruch 8,
**dadurch gekennzeichnet**,
daß die geeichte Feder (15) eine Schraubenfeder ist, die an ihren Enden an den Naben (105,307) befestigt ist, die in das Innere des Ventilgehäuses (1) vorspringen, und zwar von den sich einander gegenüberstehenden Innenseiten der konischen Kappe (5) und des kappenförmigen Schließgliedes (7), während das Ventil so angeordnet ist, daß das konische oder spitzbogenförmige Kopfende (207) des kappenförmigen Schließgliedes (7), das auf den Ventilsitz (108) einwirkt, dem Druckmedium gegenüberliegt derart, daß das offene Ende nach außen weist.

10. Ventil nach einem oder mehreren der vorhergehenden Patentansprüche,
**dadurch gekennzeichnet**,
daß es als Sammeleinrichtung für Verunreinigungen ausgebildet ist, wobei anstelle des napfförmigen Schließgliedes (7) ein rohrförmiges Filter (18) vorgesehen sein kann, das durchlässige Umfangs-Zylinderwände hat, daß der Innendurchmesser und der Außendurchmesser des Filters im wesentlichen dieselben sind wie diejenigen des zylindrischen Teils (107) des Schließgliedes (7), und das abgedichtet zwischen dem Ventilsitz (108) und dem Ablenkstück (5) angeordnet werden kann.

11. Ventil nach Anspruch 10,
**dadurch gekennzeichnet**,
daß der Außendurchmesser der Umfangskante des konischen, napfförmigen Ablenkstücks (5) im wesentlichen dem Durchmesser des napfförmigen Schließgliedes (7) und des rohrförmigen Filters (18) entspricht, wobei das Filter (18) aus einem Käfig besteht, der eine zylindrische Stütze (218,318) für eine durchlässige Filterwand (118) ausbildet, wobei die Kopfenden des Käfigs Kopfringe (218) aufweisen, die dichtend komprimierbar an der Umfangskante des konischen, napfförmigen Ablenkstücks (5) und am Ventilsitz (108) sind.

12. Ventil nach Anspruch 11,
**dadurch gekennzeichnet**,
daß die radialen Rippen (6), an denen das Ablenkstück (5) befestigt ist, einen radialen Abschnitt aufweisen, der sich über die Umfangskante des Ablenkstücks (5) erstreckt, und zwar zu einem Niveau mit der Außenfläche des Ablenkstücks (5) und derart geneigt ist, so daß dies der Verjüngung dieses Ablenkstücks (5) entspricht, wodurch Oberflächen ausgebildet sind, die axial am Filter (18) anliegen und die den entsprechenden Kopfring (218) an der Umfangskante des Ablenkstücks (5) verkeilen, während der Kopfring (218), der auf den Ventilsitz (108) einwirkt, an seiner äußeren Umfangsseite entsprechend konisch ausgebildet ist.

13. Ventil nach einem oder mehreren der vorhergehenden Patentansprüche,
**dadurch gekennzeichnet**,
daß der Ventilsitz (108) als konische Fläche ausgebildet ist und eine ringförmige Rille (208) hat, in die eine Abdichtung (9) eingesetzt ist, die sich um mehr als 180° um die Abdichtung erstreckt, wobei der Abstand zwischen deren Mitte und dem Ventilsitz (108) kleiner ist als der Radius oder als die Dicke der Abdichtung (9).

14. Ventil nach Anspruch 13,
**dadurch gekennzeichnet**,
daß die Abdichtung (9) ringförmig ausgebildet ist und einen kreisförmigen Querschnitt hat, während die zugehörige Rille (208) zur Aufnahme der Abdichtung ein Polygon ist, das den Querschnitt der Abdichtung (9) umschreibt.

15. Ventil nach einem oder mehreren der vorhergehenden Patentansprüche,
**dadurch gekennzeichnet**,
daß der Dichtring (8) aus zwei getrennten Teilen (8', 8'') besteht, die stabil aneinander befestigt sind oder aneinander abgedichtet werden können, wobei diese beiden Teile so geformt sind, daß jeder Teil einen Teil oder die Hälfte des Querschnitts der aufnehmenden Rille (208) für die Abdichtung (9) des Ventilsitzes (108) hat.

16. Ventil nach Anspruch 15,
**dadurch gekennzeichnet**,
daß die beiden Teile (8',8'') des Dichtringes (8) durch zwei Ringe gebildet sind, die mit einer zylindrischen Fläche (12) mit gegenseitigem Kontakt versehen sind, die an einer Seite den Scheitel der aufnehmenden Rille (208) in demjenigen Ventilsitz (108) trifft, der am weitesten vom Ventilsitz (108) entfernt ist, und an der anderen Seite eine ringförmige Fläche (13) mit gegenseitigem Kontakt in axialer Richtung trifft, die sich über eine Zwischenebene im Dichtring (8) senkrecht zur Achse des Dichtrings (8) erstreckt, während die ringförmige Fläche (13) eine andere zylindrische Fläche mit gegenseitigem Kontakt (14,14') mit größerem Durchmesser als die erste zylindrische Fläche (12) mit gegenseitigem Kontakt trifft.

17. Ventil nach einem oder mehreren der vorhergehenden Patentansprüche,
**dadurch gekennzeichnet**,
daß der Dichtring (8) abdichtend zwischen einer ringförmigen Schulter einer axialen Anlage (101) nahe dem entsprechenden Kopfende des Ventilgehäuses (1) und dem Flansch (104) einer Leitungskupplung (4) kompressibel gegen das äußere Kopfende des Dichtringes (8) durch Verwendung der Klemmittel (3) eingeklemmt werden kann.

18. Ventil nach Anspruch 17,
**dadurch gekennzeichnet**,
daß zwischen dem Flansch (104) der Leitungskupplung (4) und der äußeren Kopffläche des Dichtrings (8) eine Ringdichtung (2) vorgesehen ist, die in eine ringförmige Rille (408) im Dichtring (8) eingesetzt ist, wobei die innerste Wand der Rille teilweise von der ringförmigen Fläche (13) mit gegenseitigem Kontakt zwischen den ringförmigen Teilen (8',8'') gebildet wird und den Seitenwänden dieser Rille (408), die durch die zylindrischen Flächen (14,14') mit gegenseitigem Kontakt zwischen den beiden Ringteilen (8',8'') gebildet werden, die voneinander unterschiedliche Radien haben.

19. Ventil nach einem oder mehreren der vorhergehenden Patentansprüche,
**dadurch gekennzeichnet**,
daß der Dichtring (8) eine außen gestufte, zylindrische Erweiterung (308) hat, die an der inneren ringförmigen Schulter (101) des Ventilgehäuses (1) anliegt, welche Stufe sich radial zum Inneren des Dichtrings (8) erstreckt und eine aufnehmende Rille (508) ausbildet, die am Kopfende des Dichtringes (8) offen ist, der in das Innere des Ventilgehäuses (1) zur Ausbildung einer ringförmigen Umfangsdichtung (11) weist.

20. Ventil nach einem oder mehreren der vorhergehenden Patentansprüche,
**dadurch gekennzeichnet**,
daß das Schließglied (7,207) auf den Ventilsitz (108,9) mit Hilfe eines äußeren, ringförmigen Vorsprungs (407) einwirkt.

21. Ventil nach Anspruch 20,
**dadurch gekennzeichnet**,
daß der äußere, ringförmige Vorsprung (407) an seinem freien Ende, durch das er auf die ringförmige Abdichtung (9), die im Ventilsitz (108) vorgesehen ist, einwirkt, punktförmig ausgebildet ist.

22. Ventil nach Anspruch 20 oder 21,
**dadurch gekennzeichnet**,
daß der ringförmige Vorsprung (407) in Bezug auf das Schließglied (7) koaxial ist.

23. Ventil nach einem oder mehreren der Patentansprüche 20-22,
**dadurch gekennzeichnet**,
daß der ringförmige Vorsprung (407) über die Außenfläche des Schließgliedes (7,207) ausreichend vorspringt, um wenigstens teilweise das Spiel zwischen dem Schließglied (7) und dem Ventilsitz (108) aufzunehmen.

24. Ventil nach einem oder mehreren der Patentansprüche 20-23,
**dadurch gekennzeichnet**,
daß an derjenigen Seite des ringförmigen Vorsprungs (407), die sich am nächsten benachbart dem freien Ende des Schließgliedes (7) befindet, ein ringförmiger Hohlraum oder eine ringförmige Rille (507) ausgebildet ist.

25. Ventil nach einem oder mehreren der vorhergehenden Patentansprüche,
**dadurch gekennzeichnet**,
daß die Kopfringe (218) des zylindrischen Filterkäfigs (18) zueinander identisch ausgebildet sind und einen Abschnitt aufweisen, der sich konisch zu demjenigen äußeren Kopfende hin verjüngt, das durch einen zylindrischen Abschnitt gebildet wird, wobei die Abmessungen des gesamten Teils derart getroffen sind, daß der zylindrische Abschnitt desjenigen Kopfrings (218), der auf den Ventilsitz (108) einwirkt, in die aufnehmende Rille (208) dieses Sitzes vorstehen kann, wodurch es ermöglicht, daß der konische Abschnitt auf dem Ventilsitz (108) einwirkt, während der zylindrische Abschnitt des Ringes (218) am Abschlußende auf die frei geneigten Abschnitte der radialen Befestigungsrippen (6) einwirkt in einer Richtung derart, daß der Kopfring (218) axial anliegt und mit der äußeren Umfangskante des Ablenkstücks (5) verkeilt ist.

26. Ventil nach Anspruch 25,
**dadurch gekennzeichnet**,
daß die aufnehmende Rille (208) des Ventilsitzes (108) eine Ringdichtung (9) aufnehmen kann, die abdichtend auf das zylindrische Kopfende des entsprechenden Kopfrings (218) des Filters (18) einwirkt.

27. Ventil nach einem oder mehreren der vorhergehenden Patentansprüche,
**dadurch gekennzeichnet**,
daß das Ventilgehäuse (1) und das Ablenkstück (5) mit den radialen Befestigungsrippen (6) und den axialen Verlängerungen (106) einstückig hergestellt sind, vorzugsweise aus Kunststoffmaterial.

## Revendications

1. Soupape de retenue à plusieurs fonctions qui peut être utilisée en particulier soit comme soupape de retenue fermée par gravité, pointeau de purge d'air, soupape de retenue horizontale ou soupape de sûreté chargée par ressort, soit comme collecteur d'impuretés ; et qui comprend un logement de soupape (1) tubulaire essentiellement cylindrique qui est ouvert en ses extrémités de tête, avec lequel des connexions étanches avec des raccords (4) peuvent être réalisés et à l'intérieur duquel un siège de soupape annulaire (108) est disposé qui agit sur un élément de fermeture (7) se déplaçant axialement à l'intérieur dudit logement de soupape (1) entre une position fermée, de manière étanche contre le siège de soupape (108), et une position ouverte éloignée dudit siège (108), où à l'intérieur du logement de soupape (1), à l'extrémité opposée du siège de soupape annulaire (108), se trouve un déflecteur (5) ayant la forme d'un couvercle conique de diamètre sensiblement inférieur au logement de soupape (1), dirigé vers l'extérieur du logement de soupape (1) et fixé de manière coaxiale audit logement de soupape (1) au moyen d'ailettes radiales (6), formant ainsi une série de canaux distribués de manière périphérique autour du déflecteur (5), tandis que l'élément de fermeture (7) est placé entre le déflecteur (5) et le siège de soupape annulaire (108) et est de type godet, présentant généralement une portion cylindrique (107) à l'intérieur du logement de soupape (1) et une portion terminale conique ou ogivale (207) à l'extrémité qui agit sur le siège de soupape annulaire (108), l'élément de fermeture (7) étant guidé de manière coaxiale dans le logement de soupape (1) par sa partie cylindrique (7) coulissant le long de la partie cylindrique du déflecteur, caractérisée en ce que l'élément de fermeture (7) est guidé de manière coaxiale dans le logement de soupape (1) par sa partie cylindrique (7) coulissant le long des ailettes radiales (106) d'un arrangement circulaire interne d'ailettes radiales reliées au logement de soupape (1).

2. Soupape selon la revendication 1, caractérisée en ce que les ailettes radiales internes par lesquelles l'élément de fermeture (7) est guidé sont formées par des extensions axiales (106) vers le siège de soupape annulaire (108) des ailettes radiales (6) auxquelles le déflecteur (5) est fixé.

3. Soupape selon la revendication 1 ou 2, caractérisée en ce que le déflecteur (5) est placé à une extrémité de tête du logement de soupape (1), tandis que le siège de soupape annulaire (108) est formé par la surface radiale interne d'un joint d'étanchéité (8) qui peut être fermé hermétiquement contre et retiré de l'extrémité de tête opposée du logement de soupape (1) et est conique ou ogival comme la portion conique ou ogivale (207) correspondante de l'élément de fermeture de type godet (7).

4. Soupape selon l'une des revendications précédentes, caractérisée en ce qu'elle est utilisée en tant que soupape d'aspiration et est orientée de telle sorte que le mouvement de fermeture de l'élément de fermeture de type godet (7) correspond à la direction de la pression gravitationnelle d'un fluide sur cet élément, c'est-à-dire généralement verticalement et avec l'extrémité de tête ouverte de l'élément de fermeture de type godet (7) dirigée vers le haut.

5. Soupape selon l'une des revendications précédentes, caractérisée en ce qu'elle est utilisée en tant que pointeau de purge d'air, étant encore disposée généralement de manière verticale, avec l'extrémité de tête ouverte de l'élément de fermeture de type godet (7) dirigée généralement vers le bas.

6. Soupape selon l'une des revendications précédentes, caractérisée en ce qu'elle est utilisée en tant que soupape de retenue horizontale, des moyens élastiques (15) étant disposés entre le déflecteur (5) et l'élément de fermeture de type godet (7), lesdits moyens élastiques (15) étant pouvant être comprimés par une force légère dans la direction de l'ouverture de l'élément de fermeture (7) et qui, lorsque l'élément de fermeture (7) est en position fermée, sont essentiellement dilatés en position de repos ou en compression légère.

7. Soupape selon la revendication 6, caractérisée en ce que le composant élastiquement compressible consiste en une boursouflure (16) et le déflecteur (5) et l'élément de fermeture (7) sont munis de moyeux coaxiaux (105, 307) dirigés l'un vers l'autre qui forment soit l'élément de fixation de la boursouflure (16), soit l'élément qui comprime celle-ci.

8. Soupape selon l'une des revendications précédentes, caractérisée en ce qu'elle est utilisée en tant que soupape de sûreté ou soupape de réglage de la pression, les moyens élastiques placés entre le déflecteur (5) et l'élément de fermeture (7) étant un ressort calibré (15) qui est mis sous tension sous une charge prédéterminée dans le sens de compression de l'élément de fermeture (7) contre le siège de soupape annulaire (108).

9. Soupape selon la revendication 8, caractérisée en ce que le ressort calibré (15) est hélicoïdal et est fixé au moyen de ses extrémités sur les moyeux (105, 307) faisant saillie vers l'intérieur vers le logement de soupape (1) depuis les côtés internes se faisant mutuellement face du couvercle conique (5) et de l'élément de fermeture de type godet (7), tandis que la soupape est placée de telle sorte que l'extrémité de tête conique ou ogivale (207) de l'élément de fermeture de type godet (7) agissant sur le siège de soupape (108) fait face au fluide sous pression et que son extrémité ouverte fait face vers l'extérieur.

10. Soupape selon l'une des revendications précédentes, caractérisée en ce qu'elle est utilisée en tant que collecteur d'impuretés, l'élément de fermeture de type godet (7) pouvant être remplacé par un filtre tubulaire (18) présentant des parois cylindriques périphériques perméables et un diamètre interne et externe approximativement identique à celui de la portion cylindrique (107) de l'élément de fermeture (7) et qui peut être fermé hermétiquement entre le siège de soupape (108) et le déflecteur (5).

11. Soupape selon la revendication 10, caractérisée en ce que le diamètre externe de l'arête périphérique du déflecteur en forme de couvercle conique (5) correspond approximativement au diamètre de l'élément de fermeture de type godet (7) et du filtre tubulaire (18), le filtre (18) consistant en un boîtier fournissant un support cylindrique (218, 318) pour une paroi de filtrage perméable (118), les extrémités de tête dudit boîtier comprennent des anneaux de tête (218) qui peuvent être hermétiquement comprimés contre l'arête périphérique externe du déflecteur en forme de couvercle conique (5) et contre le siège de soupape (108).

12. Soupape selon la revendication 11, caractérisée en ce que les ailettes radiales (6) auxquelles le déflecteur (5) est fixé comprennent une section radiale faisant saillie au-delà de l'arête périphérique du déflecteur (5) qui s'étend à niveau avec la surface externe du déflecteur (5) et est inclinée de manière à s'adapter au cône de ce déflecteur (5), formant des surfaces qui viennent axialement en butée sur le filtre (18) et assujettissent l'anneau de tête correspondant (218) contre l'arête périphérique du déflecteur (5), tandis que l'anneau de tête (218) agissant sur le siège de soupape (108) est conique de manière correspondante sur son côté périphérique externe.

13. Soupape selon l'une des revendications précédentes, caractérisée en ce que le siège de soupape (108) est une surface conique et présente une rainure annulaire (208) destinée à recevoir un joint (9) qui recouvre plus de 180° autour du joint et la distance entre le centre de celle-ci et le siège de soupape (108) est inférieure au rayon ou à l'épaisseur dudit joint (9).

14. Soupape selon la revendication 14, caractérisée en ce que le joint (9) est un joint annulaire et présente une coupe transversale circulaire, tandis que la rainure de logement associée (208) est un polygone entourant la coupe transversale du joint (9).

15. Soupape selon l'une des revendications précédentes, caractérisée en ce que l'anneau d'étanchéité (8) est fait à partir de deux portions séparées (8', 8") fixées de manière stable ensemble ou pouvant être fermées hermétiquement ensemble, lesdites deux portions ayant une forme telle que chacune présente une portion ou la moitié de la coupe transversale de la rainure de logement (208) pour le joint (9) du siège de soupape (108).

16. Soupape selon la revendication 15, caractérisée en ce que les deux portions (8', 8") de l'anneau d'étanchéité (8) sont formées par deux anneaux munis d'une surface cylindrique (12) de contact mutuel qui d'un côté rencontre le sommet de la rainure de logement (208) dans le siège de soupape (108) éloigné dudit siège de soupape (108) et de l'autre côté rencontre la surface annulaire (13) de contact mutuel dans la direction axiale qui s'étend par-dessus un plan intermédiaire dans l'anneau d'étanchéité (8) de manière perpendiculaire à l'axe de l'anneau d'étanchéité (8), tandis que ladite surface annulaire (13) rencontre une autre surface cylindrique de contact mutuel (14, 14') de diamètre supérieur à la première surface cylindrique (12) de contact mutuel.

17. Soupape selon l'une des revendications précédentes, caractérisée en ce que l'anneau d'étanchéité (8) peut être fixé hermétiquement entre un épaulement annulaire de butée axiale (101) à proximité de l'extrémité de tête correspondante du logement de soupape (1) et la bride (104) d'un raccord (4) compressible contre l'extrémité de tête externe de l'anneau d'étanchéité (8) grâce à des moyens de serrage (3).

18. Soupape selon la revendication 17, caractérisée en ce que, entre la bride (104) du raccord (4) et la surface de tête externe de l'anneau d'étanchéité (8), se trouve un joint annulaire (2) qui est reçu dans une rainure annulaire (408) dans l'anneau d'étanchéité (8), la paroi interne de ladite rainure étant formée par une partie de la surface annulaire (13) de contact mutuel entre les portions annulaires (8', 8") et les parois latérales de cette rainure (408) étant formées par les surfaces cylindriques (14, 14') de contact mutuel entre lesdites portions d'anneau (8', 8") qui présentent des rayons différents l'un de l'autre.

19. Soupape selon l'une des revendications précédentes, caractérisée en ce que l'anneau d'étanchéité (8) comprend un élargissement cylindrique étalonné externe (308) qui vient en butée contre l'épaulement annulaire interne (101) du logement de soupape (1), ledit étalonnement s'étend radialement vers l'intérieur de l'anneau d'étanchéité (8) et forme une rainure de logement (508) qui est ouverte à l'extrémité de tête de l'anneau d'étanchéité (8) faisant face à l'intérieur du logement de soupape (1), pour un joint périphérique annulaire (11).

20. Soupape selon l'une des revendications précédentes, caractérisée en ce que l'élément de fermeture (7, 207) agit sur le siège de soupape (108, 9) au moyen d'un ergot annulaire externe (407).

21. Soupape selon la revendication 20, caractérisée en ce que l'ergot annulaire externe (407) est formé en un point à son extrémité libre par lequel il agit sur le joint annulaire (9) disposé dans le siège de soupape (108).

22. Soupape selon la revendication 20 ou 21, caractérisée en ce que l'ergot annulaire (407) est coaxial avec l'élément de fermeture (7).

23. Soupape selon l'une des revendications 20 à 22, caractérisée en ce que l'ergot annulaire (407) fait saillie au-delà de la surface externe de l'élément de fermeture (7, 207) suffisamment pour compenser au moins partiellement le jeu entre l'élément de fermeture (7) et le siège de soupape (108).

24. Soupape selon l'une des revendications précédentes 20 à 23, caractérisée en ce que sur le côté de l'ergot annulaire (407) le plus proche de l'extrémité libre de l'élément de fermeture (7) se trouve un creux annulaire ou une rainure annulaire (507).

25. Soupape selon l'une des revendications précédentes, caractérisée en ce que les anneaux de tête (218) du boîtier de filtre cylindrique (18) sont fabriqués de manière identique les uns par rapport aux autres et comprennent une section qui devient conique vers l'extrémité de tête externe qui est formée par une section cylindrique, les dimensions de l'ensemble étant telles que la section cylindrique de l'anneau de tête (218) agissant sur le siège de soupape (108) peuvent faire saillie dans la rainure de logement (208) de ce siège, permettant à la section conique d'agir sur ledit siège de soupape (108), tandis que la section cylindrique de l'anneau (218) à l'extrémité du déflecteur agit sur les sections inclinées libres des ailettes de fixation radiales (6) dans une direction telle que l'anneau de tête (218) vient en butée axiale et est assujetti contre l'arête périphérique externe du déflecteur (5).

26. Soupape selon la revendication 25, caractérisée en ce que la rainure de logement (208) du siège de soupape (108) peut recevoir un joint annulaire (9) agissant de manière hermétique sur l'extrémité de tête cylindrique de l'anneau d'étanchéité (218) correspondant du filtre (18).

27. Soupape selon l'une des revendications précédentes, caractérisée en ce que le logement de soupape (1) et le déflecteur (5) avec les ailettes de fixation radiales (6) et les extensions radiales (106) sont faits en une seule pièce, de préférence en matière plastique.
